# EUROPEAN PATENT APPLICATION

(11) **EP 1 710 270 A1**
(43) Date of publication of application: **11.10.2006**
(21) Application number: 05709363.5
(22) Date of filing: 26.01.2005
(51) Int. Cl.: C08G 65/336, C08L 71/02

(54) **METHOD FOR PRODUCING HYDROLYZABLE SILICON GROUP-CONTAINING OXYALKYLENE POLYMER AND CURING COMPOSITION THEREOF**

(30) Priority: 30.01.2004 JP 2004024169
(71) Applicant: Kaneka Medix Corporation, Osaka-shi, Osaka 530-8288 (JP)
(72) Inventor: ODAKA, Hidetoshi, Takasago-shi Hyogo 6768688 (JP); IWAKIRI, Hiroshi, Takasago-shi Hyogo 6768688 (JP)
(74) Representative: Hart Davis, Jason
(86) International application number: PCT/JP2005/001023
(87) International publication number: WO 2005/073276

(57) **Abstract**

The problem of the invention is to efficiently produce a hydrolyzable silicon group-containing oxyalkylene polymer which has a low viscosity while maintaining a plasticity of a cured product and which does not contaminate an area around a sealing portion and/or has no adverse effect on an adhesion. The problem is solved by a process for producing a hydrolyzable silicon group-containing oxyalkylene polymer, which comprises using, as a starting material, an oxyalkylene polymer in which a first oxyalkylene polymer having at least two active hydrogen groups and a second oxyalkylene polymer having one active hydrogen group coexist, and converting the active hydrogen groups to hydrolyzable silicon groups.

## Description

### Technical Field

The present invention relates to a curing composition which can be cured in the presence of moisture and a process for producing a hydrolyzable silicon group-containing oxyalkylene polymer which is a starting material thereof.

### Background Art

A method in which various compounds having a hydrolyzable silicon group in the end are cured and used in sealing materials, adhesives and the like is an industrially useful well-known method. Of these compounds, a polymer whose main chain is an oxyalkylene in particular is liquid at room temperature, and a cured product thereof still keeps a plasticity at a relatively low temperature. Thus, it has properties which are advantageous for use in sealing materials, adhesives and the like. Further, a method in which these hydrolyzable silicon group-containing organic polymers are used in combination with an epoxy resin or an acrylic resin to improve strengths, an adhesion and a weatherability is also an industrially useful well-known method. Examples of such moisture-curing compounds include moisture-curing compounds having a hydrolyzable silicon group in the end as described in (Patent Document 1), (Patent Document 2) and the like.

With respect to such compounds having the hydrolyzable silicon group in the end, generally, the higher the molecular weight, the more the plasticity of the cured products is increased, but the viscosity of the compounds is raised, which notably worsens the workability. When the molecular weight of such compounds is low, the viscosity is decreased, but cured products are poor in plasticity. For providing the low viscosity while maintaining the plasticity of cured products, various plasticizers have been so far used.

As the plasticizers, aromatic carboxylic acid esters, aliphatic carboxylic acid esters, glycol esters, phosphoric acid esters, epoxy plasticizers, chlorinated paraffins and the like have been used. However, these plasticizers have a migration property. Accordingly, when they are used as sealing materials and the like, there are drawbacks such as contamination of an area around a sealing portion and an adverse effect on an adhesion.

For solving these problems, a method using, instead of a plasticizer, an oxyalkylene polymer in which one end of a linear molecular chain is blocked with an organic group and a hydrolyzable silicon group is provided in the other end (Patent Document 3), a method using a combination of a high-molecular-weight oxyalkylene polymer having a high content of a hydrolyzable silicon group per molecule and a low-molecular-weight oxyalkylene polymer having a low content of a hydrolyzable silicon group per molecule (Patent Document 4), a method using a combination of a high-molecular-weight oxyalkylene polymer having a hydrolyzable silicon group content of 50% or more per terminal group and an oxyalkylene polymer having a hydrolyzable silicon group content of less than 50% per terminal group (Patent Document 5) and the like have been proposed.

These oxyalkylene polymers with the low content of the hydrolyzable silicon group per molecule which are used instead of the plasticizer are synthesized from an oxyalkylene polymer having an active hydrogen group such as a hydroxyl group in the end resulting from the polymerization in the presence of a catalyst such as an alkali metal catalyst, a metal porphyrin catalyst, a double metal cyanide complex catalyst or a compound catalyst having a p=N bond. Among them, a double metal cyanide complex catalyst is preferably used, because when propylene oxide is used as an alkylene oxide in particular in producing an oxyalkylene polymer with the catalyst, an unsaturatedmono-ol is less byproduced during polymerization, and a high-molecular-weight oxyalkylene polymer, having a narrow distribution of molecular weight, which cannot be obtained with an alkali metal catalyst is provided.

However, an oxyalkylene polymer with a low content of a hydrolyzable silicon group per molecule, which is used instead of a plasticizer, has been so far produced by converting an active hydrogen group such as a hydroxyl group to a hydrolyzable silicon group, separately from an oxyalkylene polymer with a high content of a hydrolyzable silicon group per molecule. Later, it has been used instead of a plasticizer by being added to a relatively high-molecular-weight oxyalkylene polymer with a high content of a hydrolyzable silicon group per molecule. That is, a relatively high-molecular-weight oxyalkylene polymer with a high content of a hydrolyzable silicon group per molecule and an oxyalkylene polymer with a low content of a hydrolyzable silicon group per molecule which is used instead of a plasticizer have been produced separately, making a production process intricate.
Patent Document 1: JP-A-3-72527
Patent Document 2: JP-A-3-47825
Patent Document 3: JP-A-4-57850
Patent Document 4: JP-A-5-59267
Patent Document 5: JP-A-9-95609

### Disclosure of the Invention

### Problems that the Invention is to Solve

Accordingly, an efficient process for producing a hydrolyzable silicon group-containing oxyalkylene polymer which has a low viscosity while maintaining a plasticity of a cured product and which does not contaminate an area around a sealing portion and has no adverse effect on an adhesion has been studied, and the invention has been consequently made. Means for Solving the Problems

That is, the invention is a process for producing a hydrolyzable silicon group-containing oxyalkylene polymer, which comprises using, as a starting material, an oxyalkylene polymer in which a first oxyalkylene polymer having at least two active hydrogen groups and a second oxyalkylene polymer having one active hydrogen group coexist, and converting the active hydrogen groups to hydrolyzable silicon groups.

### Effect of the Invention

According to the invention, a hydrolyzable silicon group-containing oxyalkylene polymer which has a low viscosity while maintaining a plasticity of a cured product and which does not contaminate an area around a sealing portion and has no adverse effect on an adhesion can be produced efficiently.

### Best Mode for Carrying Out the Invention

In the process for producing the hydrolyzable silicon group-containing oxyalkylene polymer in the invention, at least two types of oxyalkylene polymers are used as starting materials.

The first oxyalkylene polymer starting material is an oxyalkylene polymer having at least two active hydrogen groups, and the second oxyalkylene polymer starting material is an oxyalkylene polymer having one active hydrogen group.

A number average molecular weight of the first oxyalkylene polymer is preferably 4, 000 or more per active hydrogen group. When it is less than 4,000, an elongation of the cured product of the hydrolyzable silicon group-containing oxyalkylene polymer might be decreased. The number average molecular weight is more preferably 5,000 or more, especially preferably 7,000 or more.

On the other hand, it is preferable that the molecular weight of the second oxyalkylene polymer is not more than 0.6 time the GPC (gel permeation chromatography) peak top molecular weight of the first oxyalkylene polymer. When it is more than 0.6 time, the effect of lowering the viscosity might be decreased. This molecular weight is more preferably at most 0.5 time, especially preferably at most 0.4 time. Meanwhile, when the molecular weight of the second oxyalkylene polymer is too low, a large amount of a silicon compound is required in converting the active hydrogen group to the hydrolyzable silicon group which leads to the increase in cost. Thus, it is practically preferable that the molecular weight of the second oxyalkylene polymer is 2,000 or more.

A viscosity of the second oxyalkylene polymer is preferably at most 3/4 a viscosity of the polymer in which the first and second oxyalkylene polymers coexist. When it is more than 3/4, the effect of decreasing the viscosity is considered to be low.

It is preferable that the second oxyalkylene polymer coexists in an amount of 300 parts by weight or less per 100 parts by weight of the first oxyalkylene polymer. When the amount is more than 300 parts by weight, the curability of the finally obtained hydrolyzable silicon group-containing oxyalkylene polymer is notably decreased, and the polymer might not be cured in some cases. It is more preferably 200 parts by weight or less, especially preferably 100 parts by weight or less. However, when it is too small, the expected effect of decreasing the viscosity is not obtained. Thus, it is preferably 3 parts by weight or more, more preferably 5 parts by weight or more, especially preferably 10 parts by weight or more. It is most preferably 20 parts by weight or more.

The oxyalkylene polymer which is used as the starting material in the invention can be produced by polymerizing an initiator such as a hydroxy compound having at least one hydroxyl group with an alkylene oxide or the like in the presence of a catalyst such as an alkali metal catalyst, a metal porphyrin catalyst (refer to gazettes of JP-A-61-197631 and the like), a double metal cyanide complex catalyst (refer to gazettes of USP 3278457, USP 3278458, USP 3278459, USP 3427256, USP 4055188, USP 4721818 and the like) or a compound catalyst having a P=N bond (refer to gazettes of JP-A-11-106500, JP-A-10-36499, JP-A-11-302371 and the like). Of these catalysts, a double metal cyanide complex catalyst and a compound catalyst having a P=N bond which can provide a high-molecular-weight, colorless oxyalkylene polymer are preferable, and a double metal cyanide complex catalyst is especially preferable.

Examples of the double metal cyanide complex catalyst include Zn₃[Fe (CN)₆]₂, Zn₃[Co(CN)₆]₂, Fe [Fe (CN)₆], Fe [Co (CN)₆] and the like. A catalyst having a structure in which Zn₃[Co(CN)₆]₂ (namely, a zinc hexacyanocobaltate complex) is a catalyst skeleton and an organic ligand is coordinated is preferable.

Such a catalyst can be produced by, for example, coordinating an organic ligand in a reaction product resulting from a reaction of a metal halide salt with an alkali metal cyanometalate in water. As the metal of the metal halide salt, Zn(II) or Fe(II) is preferable, and Zn(II) is especially preferable. As the metal halide salt, zinc chloride is especially preferable. As the metal constituting the cyanometalate of the alkali metal cyanometalate, Co(III) or Fe (III) is preferable, and Co (III) is especially preferable. As the alkali metal cyanometalate, potassium hexacyanocobaltate is preferable. As the organic ligand, alcohol and/or ether are/is preferable. At least one selected from alcohols such as tert -butyl alcohol, compounds represented by the following formula 4, ethanol, sec-butyl alcohol, n-butyl alcohol, isobutyl alcohol, tert-pentyl alcohol, isopentyl alcohol and isopropyl alcohol and ethers such as ethylene glycol dimethyl ether (hereinafter referred to as glyme), diglyme (diethylene glycol dimethyl ether), triglyme (triethylene glycol dimethyl ether), dioxane and polyether with Mn of from 150 to 5,000 is preferable. Of these, at least one selected from tert-butyl alcohol, compounds represented by the following formula 4 and glyme is especially preferable.

R⁴-C (CH₃)₂(OR⁵)ₙOH formula 4

(wherein R⁴ is a methyl group or an ethyl group, R⁵ is an ethylene group or the ethylene group whose hydrogen atom is substituted with a methyl group or an ethyl group, and n is 1, 2 or 3.)
Preferable examples of the compounds represented by formula 4 include ethylene glycol mono-tert-butyl ether, propylene glycol mono-tert-butyl ether, ethylene glycol mono-tert-pentyl ether and propylene glycol mono-tert-pentyl ether. Ethylene glycol mono-tert-butyl ether is especially preferable.

The double metal cyanide complex catalyst can be produced by stirring and maturing a catalyst skeleton resulting from a reaction of the metal halide salt with the alkali metal cyanometalate in the organic ligand, and then conducting separation by filtration, washing and drying in a known manner.

As the initiator, an active hydrogen-containing compound can be used, and examples thereof include the following: monohydric primary, secondary and tertiary alcohols such as methanol, ethanol, propanol, butanol, pentanol, hexanol, heptanol, octanol, nonanol and decanol; unsaturated group-containing monohydric alcohols such as allyl alcohol, methallyl alcohol and propenyl alcohol; unsaturated group-containing monohydric alcohols such as monoallyletherified compounds or monovinyletherified compounds obtained by monoallyletherifying or monovinyletherifying ethylene glycol, diethylene glycol, propylene glycol, dipropylene glycol, 1,3-propanediol, neopentyl glycol, 1,4-butanediol, 1,5-pentanediol, 1,6-hexanediol and 1,4-cyclohexanediol, and saturated monohydric alcohols obtained by monoalkyletherifying the same; polyhydric alcohols such as ethylene glycol, diethylene glycol, propylene glycol, dipropylene glycol, 1,3-propanediol, neopentyl glycol, 1,4-butanediol, 1,5-pentanediol, 1,6-hexanediol, 1,4-cyclohexanediol, glycerin, diglycerin, trimethylolpropane, pentaerythritol, glucose, sorbitol, sucrose and methyl glycoside; alkanolamines such as monoethanolamine, diethanolamine and triethanolamine; phenol compounds such as bisphenol A, bisphenol F, bisphenol S, resorcin and hydroquinone; aliphatic amines such as ethylenediamine, diethylenetriamine and hexamethylenediamine; and an oxyalkylene polymer obtained by a reaction of the foregoing initiators with alkylene oxide and having a lower molecular weight than the hydrolyzable silicon group-containing oxyalkylene polymer which is a desired product.

The foregoing initiators may be used either singly or in combination of two or more. However, as the first initiator used for polymerization of the first oxyalkylene polymer, a compound mainly containing at least two active hydrogen groups is preferable. The first oxyalkylene polymer is a component which is converted to a hydrolyzable silicon group-containing oxyalkylene polymer and then cured with moisture or the like to form a rubbery elastomer. In view of its purpose, a compound mainly containing at least two active hydrogen groups is preferable.

Meanwhile, as the second initiator used for polymerization of the second oxyalkylene polymer, a compound mainly containing one active hydrogen group is preferable. The second oxyalkylene polymer has a relatively low molecular weight because it coexists for decreasing the viscosity of the oxyalkylene polymer. For this reason, when a compound having two or more active hydrogen groups is contained in a large amount, a plasticity of the cured product of the hydrolyzable silicon group-containing oxyalkylene polymer made from the oxyalkylene polymer in which the first and second oxyalkylene polymers coexist is decreased, and a hard, brittle cured product is provided. When an oxyalkylene polymer resulting from polymerization using a compound containing one active hydrogen group as a second initiator is used as a starting material, the plasticity of the cured product of the hydrolyzable silicon group-containing oxyalkylene polymer is not decreased even after introduction of the hydrolyzable silicon group and subsequent curing with moisture or the like. Therefore, a second initiator used for producing the second oxyalkylene polymer is preferably a compound mainly containing one active hydrogen group, and it is especially preferable to use an initiator represented by formula 1.

R¹-OH formula 1

(wherein R¹ is a monovalent organic group free from an unsaturated group and containing at least one selected from the group consisting of carbon, hydrogen, oxygen and nitrogen as a constituent atom.)
The amount of the initiator of the second oxyalkylene polymer is 5 or less in terms of a molar ratio relative to the amount of the initiator of the first oxyalkylene polymer. When the amount is more than 5, the curability of the finally obtained hydrolyzable silicon group-containing oxypropylene polymer is notably decreased, and it might not be cured in some cases. Its molar ratio is preferably 3 or less, especially preferably 2 or less.

Examples of the alkylene oxide include ethylene oxide, propylene oxide, 1,2-butylene oxide, 2,3-butylene oxide, isobutylene oxide, epichlorohydrin, epibromohydrin, methyl glycidyl ether, allyl glycidyl ether, butyl glycidyl ether, 2-ethylhexylene glycidyl ether, trifluoropropylene oxide and the like. These may be used either singly or in combination of two or more. Of these, propylene oxide is preferable.

A process for producing the oxyalkylene polymer in which the first oxyalkylene polymer having at least two active hydrogen groups and the second oxyalkylene polymer having one active hydrogen group coexist as starting materials of the invention includes a process in which the first oxyalkylene polymer is produced by polymerizing at first and further the second initiator for the second oxyalkylene polymer is added (post addition process) and a process in which the first and second polymerizations are conducted simultaneously in the presence of both the first and second initiators (co-initiation process). The polymerization may be conducted by either of these processes.
Moreover, a process in which polymerizations are conducted separately and the resulting polymers are mixed also can be used.

In the post addition process, the GPC peak top molecular weights of the first and second oxyalkylene polymers and their ratio can freely be determined by changing the timing of adding the initiator of the second oxyalkylene polymer and the feed rate of the alkylene oxide. It can be applied as a process for effectively lowering the viscosity of the oxyalkylene polymer.

It is preferable that the initiator for the second oxyalkylene polymer is added after formation of the first oxyalkylene polymer up to approximately the intended molecular weight. When initiators different in GPC peak top molecular weight coexist in the polymerization of the alkylene oxide using the double metal cyanide complex, there is a characteristic tendency that the polymerization using the initiator having the lower molecular weight preferentially proceeds and the polymerization of the initiator having the higher molecular weight little proceeds. This tendency continues until the GPC peak top molecular weight ratio of the oxyalkylene polymers obtained using the initiators different in molecular weight is close to the ratio of the numbers of the active hydrogen groups of the initiators, and the molecular weights of the respective initiators are then increased while maintaining the very ratio. Accordingly, for freely determining the GPC peak top molecular weight ratio of the first and second oxyalkylene polymers, it is preferable that after the first oxyalkylene polymer is formed to approximately the intended molecular weight, the initiator of the second oxyalkylene polymer (namely, the initiator having one active hydrogen group) is added.

The molecular weight of the second oxyalkylene polymer can freely be determined from an amount of an alkylene oxide which is fed after addition of the initiator of the second oxyalkylene polymer. The feed rate of the alkylene oxide is not more than 0.6 times the feed rate of the alkylene oxide per molar amount of the first initiator fed in the polymerization for producing the first oxyalkylene polymer. When it is more than 0.6 times, the molecular weight of the second oxyalkylene polymer is increased, therefore it is undesirable. The feed rate of the alkylene oxide is preferably at most 0.5 times, especially preferably at most 0.4 times.

On the other hand, in the co-initiation process, the GPC peak top molecular ratio of the first and second oxyalkylene polymers cannot freely be determined. However, since the second oxyalkylene polymer can be formed along with the first oxyalkylene polymer, the oxyalkylene polymer in which the second oxyalkylene polymer high in both the molecular weight and its ratio coexists can be obtained easily. Since such an oxyalkylene polymer has a high molecular weight, the effect of decreasing the viscosity is low, but the amount of the hydrolyzable silicon group to be introduced is decreased because the number of the molecular end is decreased, which is economically advantageous. It can be applied as a process in which the plasticity of the cured product resulting from curing with moisture or the like after introduction of the hydrolyzable silicon group can appropriately be imparted.

The hydrolyzable silicon group-containing oxyalkylene polymer of the invention is obtained by introducing the hydrolyzable silicon group into the active hydrogen group-containing oxyalkylene polymer in a suitable manner.

As the hydrolyzable silicon group in the invention, a silicon group which allows hydrolysis with moisture and a crosslinking reaction can be used, and a generally known hydrolyzable silicon group is usable.

For example, a silicon group represented by formula 5 is available.

-SiXₐR₃₋ₐ formula 5

In the formula, R is a substituted or unsubstituted monovalent organic group having from 1 to 20 carbon atoms, and it is preferably an alkyl group having 8 or less carbon atoms, a phenyl group or a fluoroalkyl group. A methyl group, an ethyl group, a propyl group, a butyl group, a hexyl group, a cyclohexyl group, a phenyl group and the like are especially preferable.

X is a hydrolyzable group, and examples thereof include a halogen atom, an alkoxy group, an acyloxy group, an amide group, an amino group, an aminooxy group, a ketoximate group and the like.

In these groups, the carbon number of the carbon atom-containing hydrolyzable group is preferably 6 or less, especially preferably 4 or less. A preferable hydrolyzable group is a lower alkoxy group having the carbon number of 4 or less. Special examples thereof can include a methoxy group, an ethoxy group, a propoxy group, a propenyloxy group and the like. a is 1, 2 or 3, and 2 or 3 is especially preferable.

A method in which the silicon group represented by formula 5 is introduced into the oxyalkylene polymer is not particularly limited. The introduction can be conducted by, for example, the followingmethods (A) to (D). When the hydrolyzable silicon group is introduced by the following method (A) or (D), the polymer is used by being converted to an unsaturated group-containing oxyalkylene polymer. In this case, however, an initiator represented by formula 1 has to be used as the initiator of the second oxyalkylene polymer having one active hydrogen group.

R¹-OH formula 1

wherein R¹ is a monovalent organic group free from an unsaturated group and containing at least one selected from the group consisting of carbon, hydrogen, oxygen and nitrogen as a constituent atom.

When the second oxyalkylene polymer is formed using an initiator in which R¹ has an unsaturated group and the active hydrogen group contained in the second oxyalkylene polymer is converted to an unsaturated group, an oxyalkylene polymer having at least two unsaturated groups is provided. As a result, the plasticity of the cured product of the hydrolyzable silicon group-containing oxyalkylene polymer in the invention which is obtained by curing with moisture or the like is decreased, and a hard, brittle cured product is provided.

Accordingly, when the hydrolyzable silicon group is introduced by the following method (A) or (D), the initiator represented by formula 1 should be used as the initiator for the second oxyalkylene polymer having one active hydrogen group.

The introduction of the hydrolyzable silicon group by the method (B) or (C) has a defect that the viscosity tends to be more increased than the introduction of the hydrolyzable silicon group by the method (A) or (D) because of the side reaction which proceeds during the reaction of the active hydrogen group with the isocyanate compound. When using the oxyalkylene polymer in which the first and second oxyalkylene polymers having the active hydrogen groups coexist as starting materials of the invention, it is possible to decrease the viscosity of the oxyalkylene polymers having the active hydrogen groups as starting materials, which is used for effectively decreasing the viscosity of the hydrolyzable silicon group-containing oxyalkylene polymer.

(A) Method in which an active hydrogen group contained in an oxyalkylene polymer is converted to an unsaturated group (formula 2) to form an unsaturated group-containing oxyalkylene polymer which is then reacted with a hydrosilyl-group compound represented by formula 6.

   -O-R² formula 2

   wherein R² is a monovalent organic group having an unsaturated bond and containing at least one selected from the group consisting of carbon, hydrogen, oxygen and nitrogen as a constituent atom.

   HSiXₐR₃₋ₐ formula 6

   wherein R, X and a are as defined above.

A method for introducing an unsaturated group as described herein includes a method in which a compound having an unsaturated group and a functional group is reacted with an active hydrogen group of an oxyalkylene polymer and the unsaturated group is incorporated by forming them via an ether bond, an ester bond, a urethane bond, a carbonate bond or the like, a method in which an unsaturated group-containing epoxy compound such as allyl glycidyl ether is added in polymerizing an alkylene oxide to conduct copolymerization, whereby an unsaturated group is introduced into a side chain, and the like.

(B) Method in which an active hydrogen group contained in an oxyalkylene polymer is reacted with a compound represented by formula 3.

R₃₋ₐ-SiXₐ-R³NCO formula 3

wherein R, X and a are as defined above, and R³ is a substituted or unsubstituted divalent organic group having from 1 to 20 carbon atoms.

(C) Method in which an active hydrogen group contained in an oxyalkylene polymer is reacted with a polyisocyanate compound such as tolylene diisocyanate to convert it to an isocyanate group, and the isocyanate group is then reacted with a W group of a silicon compound represented by formula 7.

-R₃₋ₐ-SiXₐ-R³W formula 7

wherein R, R³, X and a are as defined above, and W is an active hydrogen-containing group selected from a hydroxyl group, a carboxyl group, a mercapto group and an amino group (primary or secondary).

(D) Method in which an active hydrogen group contained in an oxyalkylene polymer is converted to an unsaturated group, and the unsaturated group is reacted with a silicon compound represented by formula 7 in which W is a mercapto group.

The composition of the invention can contain various known curing catalysts, fillers and additives. Further, it can contain plasticizers and the like as required.

The content of the hydrolyzable silicon group of the first and second oxyalkylene polymers is preferably at least 40% and at most 100%, more preferably at least 50% and at most 100%, especially preferably at least 60% and at most 100% relative to the active hydrogen group contained in the oxyalkylene polymer as the starting material.

The hydrolyzable silicon group-containing oxyalkylene polymer obtained by the process of the invention can be formed into a room temperature-curing composition either as such or by incorporating various additives.

As the curing catalyst, hitherto-known catalysts can widely be used. Specific examples thereof include silanol condensation catalysts, namely, titanium compounds such as tetrabutyl titanate, tetrapropyl titanate and titanium tetraacetyl acetonate; tetravalent tin compounds such as dibutyltin dilaurate, dzbutyltin maleate, dibutyltin phthalate, dibutyltindioctate, dibutyltin diethyl hexanoate, dibutyltin dimethyl maleate, dibutyltin diethyl maleate, dibutyltin dibutyl maleate, dibutyltin dioctyl maleate, dibutyltin ditridecyl maleate, dibutyltin dibenzyl maleate, dibutyltin diacetate, dioctyltin diethyl maleate, dioctyltin dioctyl maleate, dibutyltindimethoxide, dibutyltindinonyl phenoxide, dibutyltin oxide, dibutyltin diacetyl acetonate, dibutyltin diethyl acetoacetonate and a reaction product of dibutyltin oxide with a phthalic acid ester; divalent tin compounds such as tin octanoate, tin naphthenate, tin stearate and tin versatate; organoaluminum compounds such as aluminum trisacetyl acetonate, aluminum trisethyl acetoacetate and diisopropoxyaluminum ethyl acetoacetate; zirconium compounds such as zirconium tetraacetyl acetonate; lead octanoate; amine compounds such as butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabzcyclo (5,4,0) undecene-7 (DBU) or salts of these amine compounds and carboxylic acids or the like; low-molecular-weight polyamide resins obtained from larger amounts of polyamines and polybasic acids; reaction products of larger amounts of polyamines with epoxy compounds; and silane coupling agents having an amino group, such as γ-aminopropyltrimethoxysilane and N-(β-aminoethyl)aminopropylmethyldimethoxysilane, as well as known silanol condensation catalysts such as other acid catalysts and basic catalysts, and the like. These catalysts may be used either singly or in combination of two or more.

The use amount of these curing catalysts is preferably from 0.1 to 20 parts by weight per 100 parts by weight of the oxyalkylene polymer of the invention. When the use amount of the curing catalysts is too small, the curing rate is decreased, and the curing reaction does not proceed satisfactorily. Thus, it is undesirable. Meanwhile, when the use amount of the curing catalyst is too large, local heat generation or expansion occurs at the time of curing, and a good cured product is hardly obtained. Thus, it is undesirable.

In the curing composition of the invention, a silicon compound represented by the general formula R₄₋ₐSi (OR)ₐ (wherein R and a are as defined above) may be incorporated in order to enhance the activity of condensation catalysts. The silicon compound is not limited. However, compounds of the general formula in which R is an aryl group having from 6 to 20 carbon atoms, such as phenyltrimethoxysilane, phenylmethyldimethoxysilane, phenyldimethylmethoxysilane, diphenyldimethoxysilane, diphenyldiethoxysilane and triphenylmethoxysilane, are preferable because an effect of accelerating the curing reaction of the composition is great. Especially, diphenyldimethoxysilane and diphenyldiethoxysilane are preferable because they are less costly and can easily be procured. The amount of the silicon compound is preferably from 0.01 to 20 parts by weight, more preferably from 0.1 to 10 parts by weight per 100 parts by weight of the oxyalkylene polymer of the invention. When the amount of the silicon compound is below this range, the effect of accelerating the curing reaction might be decreased. Meanwhile, when the amount of the silicon compound is above this range, a hardness or a tensile strength of a cured product might be decreased.

In the composition of the invention, a silane coupling agent, a reactionproduct of a silane coupling agent or a compound other than the silane coupling agent can be incorporated as an adhesive agent. Specific examples of the silane coupling agent include isocyanate group-containing silanes such as γ-isocyanatopropyltrimethoxysilane, γ-isocyanatopropyltriethoxysilane, γ-isocyanatopropylmethyldiethoxysilane and γ-isocyanatopropylmethyldimethoxysilane; amino group-containing silanes such as γ-aminopropyltrimethoxysilane, γ-aminopropyltriethoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-ureidopropyltrimethoxysilane, N-phenyl-γ-aminopropyltrimethoxysilane, N-benzyl-γ-aminopropyltrimethoxysilane and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and β-(3,4-epoxycyclohexyl)ethyltriethoxysilane; carboxysilanes such as β-carboxyethyltriethoxysilane, β-carboxyethylphenylbis(2-methoxyethoxy)silane and N-β-(carboxymethyl)aminoethyl-γ-aminopropyltrimethoxysilan e; vinyl-based unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; isocyanurate silanes such as tris (trimethoxysilyl) isocyanurate; and the like. Further, amino-modified silyl polymers, silylated amino polymers, unsaturated aminosilane complexes, phenylamino-long chain-alkyl silanes, aminosilylated silicones, silylated polyesters and the like which are derivatives obtained by modifying the same are also available as the silane coupling agent. The silane coupling agent of the invention is commonly used in the range of from 0.1 to 20 parts by weight per 100 parts by weight of the oxyalkylene polymer of the invention. Especially, it is preferable to use the same in the range of from 0.5 to 10 parts by weight.

The silane coupling agent incorporated in the curing composition of the invention shows a marked effect of improving an adhesion under a non-primer condition or a primer treatment condition when using it in various adherends, namely, inorganic materials such as glass, aluminum, stainless steel, zinc, copper and mortar and organic materials such as polyvinyl chloride, acrylics, polyesters, polyethylene, polypropylene and polycarbonates. When it is used under a non-primer condition, the effect of improving the adhesion to various adherends is outstanding. Specific examples of materials other than the silane coupling agent are not particularly limited. For example, epoxy resins, phenolic resins, sulfur, alkyl titanates, aromatic polyisocyanates and the like are mentioned. The adhesive-imparting agent may be used either singly or in combination of two or more. The adhesion to the adherends can be improved by addition of these adhesive agents.

The composition of the invention can contain various fillers. Examples of the fillers include reinforcing fillers such as fumed silica, precipitated silica, crystalline silica, fused silica, dolomite, silicic anhydride, silicic hydride and carbon black; fillers such as ground calcium carbonate, colloidal calcium carbonate, magnesium carbonate, diatomaceous earth, calcined clay, clay, talc, titanium oxide, bentonite, organic bentonite, ferric oxide, aluminum fine powder, flint powder, zinc oxide, active zinc oxide, shirasu balloon, glass microballoon, organic microballoon of a phenol resin or a vinylidene chloride resin, and resin powders, e.g. PVC powder and PMMA powder; fibrous fillers such as asbestos, and glass fibers and filaments; and the like. When the filler is used, the use amount thereof is from 1 to 300 parts by weight, preferably from 10 to 200 parts by weight per 100 parts by weight of the oxyalkylene polymer of the invention.

When it is required to obtain a cured product having a high strength by the use of these fillers, a filler selected from fumed silica, precipitated silica, crystalline silica, fused silica, dolomite, silicic anhydride, silicic hydride, carbon black, surface-treated finely divided calcium carbonate, calcined clay, clay and active zinc oxide is preferable. When the filler is used in the range of from 1 to 200 parts by weight per 100 parts by weight of the oxyalkylene polymer of the invention, good results are obtained. When it is required to obtain a cured product having a low strength and a high break elongation, good results are obtained by using the filler mainly selected from titanium oxide, calcium carbonate, magnesium carbonate, talc, ferric oxide, zinc oxide and shirasu balloon in the range of from 5 to 200 parts by weight per 100 parts by weight of the oxyalkylene polymer of the invention. Generally, as the specific surface value of calcium carbonate is higher, the effect of improving a break strength, a break elongation and an adhesion of a cured product is increased. Of course, these fillers may be used either singly or in combination of two or more. It is possible to use a combination of calcium carbonates having a particle size of 1 µ or more, such as fatty acid-surface-treated colloidal calcium carbonate and non-surface-treated ground calcium carbonate.

It is preferable to add organic balloons and inorganic balloons for improving a workability (thixotropic nature or the like) of the composition or delustering the surface of the cured product. These fillers may be surface-treated, and they may be used either singly or in combination of two or more. For improving the workability (thixotropic nature or the like), the particle size of balloons is preferably 0.1 mm or less. For delustering the surface of the cured product, the particle size is preferably from 5 to 300 µm.

The composition of the invention is advantageously used in joints of outer walls of houses, comprising ceramic siding boards especially. It is preferable that the designing of outer walls and the designing of sealing materials are well balanced. Especially, an outer wall having a high-grade touch has been used by incorporating a sputter coating, a color aggregate or the like. When the composition of the invention contains a flaky or particulate material having a diameter of 0.1 mm or more, preferably from 0.1 to 5.0 mm, a cured product is well-balanced with such an outer wall having a high-grade touch, and a weatherability is excellent, so that the excellent composition which keeps the appearance of the cured product for a long period of time is provided. When a particulate material is used, a surface with a rough touch such as a sand-spreading touch or a sandstone touch is provided. When a flaky material is used, an uneven surface ascribable to a flaky state is provided.

When the composition of the invention contains particles of a cured product for a sealing material, the cured product has an uneven surface to be able to improve the appearance. A diameter, a mixing amount and a material of particles of a cured product which are preferable for a sealing material are as follows as described in gazette of JP-A-2001-115142. The diameter is from 0.1 mm to 1 mm, preferably from 0.2 to 0.5 mm. The mixing amount is from 5 to 100% by weight, preferably from 20 to 50% by weight in the curing composition of the invention. Examples of the material may include a urethane resin, a silicone, a modified silicone, a polysulfide rubber and the like. The material is not particularly limited, so long as it is used for a sealing material. A modified-silicone-type sealing material is preferable.

In the curing composition of the invention, a property adjusting agent for adjusting tensile properties of a cured product formed as required may be incorporated. The property adjusting agent is not particularly limited. Examples thereof include alkylalkoxysilanes such as methyltrimethoxysilane, dimethyldimethoxysilane, trimethylmethoxysilane and n-propyltrimethoxysilane; alkylisopropenoxysilanes such as dimethyldiisopropenoxysilane, methyltriisopropenoxysilane and γ-glycidoxypropylmethyldiisopropenoxysilane, functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane and γ-mercaptopropylmethyldimethoxysilane; silicone waxes; polysiloxanes; and the like. The use of the property adjusting agents can increase the hardness or conversely decrease the hardness or exhibit the break elongation when curing the composition of the invention. The property adjusting agents may be used either singly or in combination of two or more.

The property adjusting agent is used in the range of from 0.1 to 20 parts by weight, preferably from 0.5 to 10 parts by weight per 100 parts by weight of the oxyalkylene polymer in the invention.

In the curing composition of the invention, a thixotropic agent (antisagging agent) may be incorporated as required for preventing sagging to improve a workability. The antisagging agent is not particularly limited. Examples thereof include polyamide waxes, hydrogenated castor oil derivatives, metallic soaps such as calcium stearate, aluminum stearate and barium stearate, and the like. These thixotropic agents (antisagging agents) may be used either singly or in combination of two or more. The thixotropic agent is used in the range of from 0.1 to 20 parts by weight per 100 parts by weight of the oxyalkylene polymer of the invention.

In the composition of the invention, a compound containing an epoxy group in one molecule can be used. When the epoxy group-containing compound is used, a restoring property of the cured product can be increased. Examples of the epoxy group-containing compound can include compounds such as epoxidized unsaturated oils, epoxidized unsaturated fatty acid esters, alicyclic epoxy compounds and epichlorohydrin derivatives, mixtures thereof and the like. Specific examples thereof include epoxidized soybean oil, epoxidized linseed oil, di-(2-ethylhexyl)4,5-epoxycyclohexane-1,2-dicarboxylate (E-PS), epoxyoctyl stearate, epoxybutyl stearate and the like. Of these, E-PS is especially preferable. For increasing the restoring property of the cured product, it is preferable to use a compound having one epoxy group in a molecule. It is advisable to use the epoxy compound in the range of from 0.5 to 50 parts by weight per 100 parts by weight of the oxyalkylene polymer of the invention.

A photo-curing substance can be used in the composition of the invention. When the photo-curing substance is used, a film of the photo-curing substance is formed on a surface of a cured product, and a stickiness of the cured product or a weatherability of the cured product can be improved. The photo-curing substance is one in which a molecular structure is chemically changed by action of light for a considerably short period of time to allow physical change such as curing. As this type of the compound, a large number of compounds including organic monomers, oligomers, resins, compositions containing the same and the like are known, and commercially available compounds can be employed. As typical compounds, unsaturated acrylic compounds, polyvinyl cinnamates, azide resins and the like can be used. Unsaturated acrylic compounds include monomers and oligomers having one to several acrylic or methacrylic unsaturated groups and mixtures thereof. Examples thereof include monomers such as propylene (butylene or ethylene) glycol di(meth)acrylate and neopentyl glycol di(meth)acrylate or oligoesters with a molecular weight of 10,000 or less. Specific examples thereof include special acrylate (difunctional)Aronix M-210, Aronix M-215, Aronix M-220, Aronix M-233, Aronix M-240 and Aronix M-245; (trifunctional) Aronix M-305, Aronix M-309, Aronix M-310, Aronix M-315, Aronix M-320, Aronix M-325; (polyfunctional) Aronix M-400; and the like. Especially acrylic functional group-containing compounds are preferable, and compounds containing on average at least 3 acrylic functional groups in one molecule are preferable. (Aronixes are all products of Toa Gosei Chemical Industry Co., Ltd.)
Examples of polyvinyl cinnamates include a photosensitive resin containing a cinnamoil group as a photosensitive group and obtained by esterifying polyvinyl alcohol with cinnamic acid, and numerous polyvinyl cinnamate derivatives. The azide resin is known as a photosensitive resin containing an azide group as a photosensitive group. There is usually a rubber photosensitive solution containing a diazide compound as a photosensitive agent, and other examples thereof are described in detail in "Kankosei Jushi" (published March 17, 1972 by Insatsu Gakkai Shuppanbu, pp. 93-, pp. 106- and pp. 117-). These may be used either singly or in combination, and by addition of a sensitizer as required. When sensitizers such as ketones and nitro compounds or accelerators such as amines are added, the effects might be enhanced.

The use amount of the photo-curing substance is preferably from 0.01 to 20 parts by weight, more preferably from 0.5 to 10 parts by weight per 100 parts by weight of the oxyalkylene polymer of the invention. When it is less than 0.01 part by weight, an effect of increasing a weatherability is low. When it is more than 20 parts by weight, a cured product becomes too hard, which causes crazing. Thus, these are undesirable.

An oxygen-curing substance can be used in the composition of the invention. As the oxygen-curing substance, an unsaturated compound capable of reacting with oxygen in air can be exemplified, and it has a function of preventing a stickiness of a surface, adhesion of a dust to a surface of a cured product or the like by reacting with oxygen in air to forma cured filmnear the surface of the curedproduct. Specific examples of the oxygen-curing substance include drying oils typified by tung oil, linseed oil and the like, various alkyd resins obtained by modifying the said compounds; acrylic polymers, epoxy resins and silicon resins modified with drying oils; liquid polymers such as 1,2-polybutadiene, 1,4-polybutadiene and C5-C8 diene polymers obtained by polymerizing or copolymerizing diene compounds such as butadiene, chloroprene, isoprene and 1,3-pentadiene, liquid copolymers such as NBR and SBR obtained by copolymerizing these diene compounds with copolymerizable monomers such as acrylonitrile and styrene such that the diene compounds are main component; their modified products (for example, maleinized products and boiled oil-modified products), and the like. These may be used either singly or in combination of two or more. Of these, tung oil and liquid diene polymers are especially preferable. When a catalyst that accelerates the oxidative curing reaction or a metal dryer is used in combination, the effect is sometimes increased. Examples of the catalyst and the metal dryer include metal salts such as cobalt naphthenate, lead naphthenate, zirconium naphthenate, cobalt octanoate and zirconium octanoate, amine compounds and the like. The oxygen-curing substance is used in an amount of, preferably from 0.1 to 20 parts by weight, more preferably from 1 to 10 parts byweight per 100 parts byweight of the oxyalkylene polymer in the invention. When the use amount is less than 0.1 part by weight, the contamination is not satisfactorily improved. When it exceeds 20 parts by weight, tensile properties and the like of the cured product tend to be impaired. As described in gazette of JP-A-3-160053, it is advisable to use the oxygen-curing substance in combination with the photo-curing substance.

An antioxidant can be used in the composition of the invention. When the antioxidant is used, the weatherability of the cured product can be increased. Examples of the antioxidant can include hindered phenol, monophenol, bisphenol and polyphenol antioxidants. Especially, a hindered phenol antioxidant is preferable. Likewise, it is possible to use hindered amine light stabilizers such as Tinubin 622LD, Tinubin 144; CHIMASSORB 944LD and CHIMASSORB 119FL (all manufactured by Nippon Ciba Geigy K.K.) ; MARK LA-57, MARK LA-62, MARK LA-67, MARK LA-63 and MARK LA-68 (all manufactured by Adeka Argus ChemicalCo., Ltd.) ; and Sanol LS-770, SanolL S-765, Sanol LS-292, Sanol LS-2626, Sanol LS-1114 and Sanol LS-744 (all manufactured by Sankyo Company, Limited). Specific examples of the antioxidant are also described in gazettes of JP-A-4-283259 and JP-A-9-194731. The antioxidant is used in an amount of, preferably from 0.1 to 10 parts by weight, more preferably from 0.2 to 5 parts byweight per 100 parts byweight of the oxyalkylene polymer in the invention.

A light stabilizer can be used in the composition of the invention. When the light stabilizer is used, photo-oxidative deterioration of the cured product can be prevented. Examples of the light stabilizer can include benzotriazole, hindered amine and benzoate compounds, and the like. Especially, a hindered amine compound is preferable. The light stabilizer is used in an amount of, preferably from 0.1 to 10 parts by weight, more preferably from 0.2 to 5 parts by weight per 100 parts by weight of the oxyalkylene polymer in the invention. Specific examples of the light stabilizer are also described in gazette of JP-A-9-194731.

When the photo-curing substance is used together in the composition of the invention and an unsaturated acrylic compound is especially employed, it is advisable to use, as described in gazette of JP-A-5-70531, a tertiary amine-containing hindered amine light stabilizer as the hindered amine light stabilizer for improving a storage stability of the composition. Examples of the tertiary amine-containing hindered amine light stabilizer can include light stabilizers such as Tinubin 622LD, Tinubin 144 and CHIMASSORB 119FL (all manufactured by Nippon Ciba Geigy K.K.); MARK La-57, La-62, La-67 and LA-63 (all manufactured by Adeka Argus Chemical Co. , Ltd.); Sanol LS-765, LS-292, LS-2626, LS-1114 and LS-744 (all manufactured by Sankyo Company, Limited); and the like.

An ultraviolet absorber can be used in the composition of the invention. When the ultraviolet absorber is used, a weatherability of the cured product can be increased. Examples of the ultraviolet absorber can include benzophenone, benzotriazole, salicylate, substituted tolyl and metal chelate compounds, and the like. Especially, a benzotriazole compound is preferable. The ultraviolet absorber is used in an amount of, preferably from 0.1 to 10 parts by weight, more preferably from 0.2 to 5 parts by weight per 100 parts by weight of the oxyalkylene polymer in the invention. It is advisable to use a phenol or hindered phenol antioxidant, a hindered amine light stabilizer and a benzotriazole ultraviolet absorber in combination.

The composition of the invention may be used as an elastic adhesive or the like by addition of an epoxy resin. Examples of the epoxy resin include epoxidized unsaturated polymers, for example, flame-retardant epoxy resins such as an epichlorohydrin-bisphenol A epoxy resin, an epichlorohydrin-bisphenol F epoxy resin and tetrabromobisphenol A glycidyl ether; a novolak epoxy resin, a hydrogenated bisphenol A epoxy resin, a glycidyl ether epoxy resin of a bisphenol A propylene oxide adduct, a p-oxybenzoic acid glycidyl ether ester epoxy resin, an m-aminophenol epoxy resin, a diaminodiphenylmethane epoxy resin, a urethane-modified epoxy resin, various alicyclic epoxy resins, N,N-diglycidylaniline, N,N-diglycidyl-o-toluidine, triglycidyl isocyanurate, polyalkylene glycol diglycidyl ether, glycidyl ether of a polyhydric alcohol such as glycerin, a hydantoin epoxy resin, a petroleum resin and the like. However, these are not critical, and epoxy resins which are generally used can be used. Epoxy resins having at least two epoxy groups in a molecule are preferable because a reactivity is high in curing and a cured product easily forms a three-dimensional network. Bisphenol A epoxy resins or novolak epoxy resins are more preferable. Regarding the use ratio of these epoxy resins and the oxyalkylene polymer of the invention, the invention oxyalkylene polymer/epoxy resin weight ratio is in the range of from 100/1 to 1/100. When the invention oxyalkylene polymer/epoxy resin ratio is less than 1/100, the effect of improving an impact strength or a toughness of the epoxy resin cured product is hardly obtained. When the invention oxyalkylene polymer/epoxy resin ratio exceeds 100/1, strengths of the oxyalkylene polymer cured product are insufficient. The preferable ratio is not absolutely determined because it varies with the usage of the curing resin composition or the like. For example, in case of improving an impact strength, a flexibility, a toughness, a peel strength and the like of the epoxy resin cured product, the oxyalkylene polymer of the invention is used in an amount of, preferably from 1 to 100 parts by weight, more preferably from 5 to 100 parts by weight per 100 parts by weight of the epoxy resin. Meanwhile, in case of improving strengths of the cured product of the invention, the epoxy resin is used in an amount of, preferably from 1 to 200 parts by weight, more preferably from 5 to 100 parts by weight per 100 parts by weight of the oxyalkylene polymer of the invention.

When the epoxy resin is used, an epoxy resin curing agent can be used in combination. An usable epoxy resin curing agent is not particularly limited. A generally used epoxy resin curing agent can be used. Specific examples thereof can include compounds, for example, primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, amine-terminated polyether; tertiary amines such as 2,4,6-tris(dimethylaminomethyl)phenol and tripropylamine and salts of these tertiary amines; polyamide resins; imidazoles; dicyanediamides; boron trifluoride complex compounds; carboxylic anhydrides such as phthalic anhydride, hexahydrophthalic anhydride, tetrahydrophthalic anhydride, dodecylsuccinic anhydride, pyrromellitic anhydride and chlorendic anhydride; alcohols; phenols; carboxylic acids; and aluminum or zirconium diketone complex compounds. However, these are not critical. The curing agents may be used either singly or in combination of two or more.

When the curing agent of the epoxy resin is used, the use amount thereof is from 0.1 to 300 parts by weight per 100 parts by weight of the epoxy resin.

A ketimine can be used as the curing agent of the epoxy resin. The ketimine is stably present in the absence of water, and decomposed into a primary amine and a ketone by water. The resulting primary amine becomes a curing agent of the epoxy resin which is cured at room temperature. The use of the ketimine allows formation of a one-component composition. Such a ketimine can be obtained by a condensation reaction of an amine compound and a carbonyl compound.

In the synthesis of the ketimine, known amine compounds and carbonyl compounds can be used. For example, as the amine compounds, it is possible to use diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine and p,p'-biphenylenediamine; polyvalent amines such as 1,2,3-triaminopropane, triaminobenzene, tris(2-aminoethyl)amine and tetra(aminomethyl)methane; polyalkylenepolyamines such as diethylenetriamine, triethylenetriamine and tetraethylenepentamine; polyoxyalkylene polyamines; aminosilanes such as γ-aminopropyltriethoxysilane, N-(β-aminoethyl)-γ-aminopropyltrimethoxysilane and N- (β-aminoethyl) -γ-aminopropylmethyldimethoxysilane; and the like. As the carbonyl compounds, it is possible to use aldehydes such as acetaldehyde, propionaldehyde, n-butyl aldehyde, isobutyl aldehyde, diethyl acetaldehyde, glyoxal and benzaldehyde; cyclic ketones such as cyclopentanone, trimethylcyclopentanone, cyclohexanone and trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone and diisobutyl ketone; β-dicarbonyl compounds such as acetylacetone, methyl acetoacetate, ethyl acetoacetate, dimethyl malonate, diethyl malonate, methylethyl malonate and dibenzoylmethane; and the like.

When an imino group is present in the ketimine, the imino group may be reacted with styrene oxide, glycidyl ethers such as butyl glycidyl ether and allyl glycidyl ether, glycidylesters and the like. These ketimines may be used either singly or in combination of two or more. The ketimine is used in an amount of from 1 to 100 parts by weight per 100 parts by weight of the epoxy resin, and the use amount thereof varies with the types of the epoxy resin and the ketimine.

In the curing composition of the invention, various additives may be added as required for adjusting properties of the curing composition or the cured product. Examples of the additives include a flame retardant, a curing property adjustingagent, aradical initiator, arnetallic inactive agent, an antiozonant, a phosphorus peroxide decomposing agent, a lubricant, a pigment, a foaming agent, a solvent, a mildewproofing agent and the like. These additives may be used either singly or in combination of two or more. Specific examples of additives other than those of the additives listed in the present specification are described in, for example, gazettes of JP-B-4-69659, JP-B-7-108928, JP-A-63-254149, JP-A-64-22904 and JP-A-2001-72854.

The curing composition of the invention may be produced as a one-component type composition whose components are all mixed in advance and stored in a sealed condition and cured with moisture in air after use. It is also possible to produce the curing composition of the invention as a two-component type composition in which as a curing agent, components such as a curingcatalyst, a filler, a plasticizer and water are separately mixed, and this mixture and the polymer composition are mixed before use.

When the curing composition is a one-component composition, all the components are previously mixed. Accordingly, it is preferable that a component containing water is used after previous dehydrative drying or dehydration is conducted under reduced pressure while mixing and kneading the components. When the curing composition is a two-component composition, there is no need to mix a main component containing the reactive silicon group-containing polymer with the curing catalyst. Accordingly, even if water is slightly contained in the mixture, gelation may hardly occur. However, when a long-term storage stability is required, it is preferable to conduct dehydrative drying. With respect to the dehydrative drying method, a heat-drying method is advantageous in case of a powdery solid product, and a vacuum dehydration method or a dehydration method using synthetic zeolite, activated alumina, silica gel or the like is advantageous in case of a liquid product. It is also possible to conduct dehydration by incorporating a small amount of an isocyanate compound to react an isocyanate group with water. In addition to such a dehydrative drying method, the storage stability is further improved by adding lower alcohols such as methanol and ethanol, and alkoxysilane compounds such as n-propyltrimethoxysilane, vinyltrimethoxysilane, vinylmethyldimethoxysilane, γ-mercaptopropylmethyldimethoxysilane, γ-mercaptopropylmethyldiethoxysilane and γ-glycidoxypropyltrimethoxysilane.

The use amount of the dehydrating agent, especially the silicon compound capable of reacting with water, such as vinyltrimethoxysilane, is from 0.1 to 20 parts by weight, preferably from 0.5 to 10 parts by weight per 100 parts by weight of the oxyalkylene polymer of the invention.

The curing composition of the invention is especially useful as elastic sealants and adhesives and can be used as sealants and adhesives of buildings, ships, automobiles, roads and the like. It is useful as construction sealants requiring non-contamination of a paint or non-contamination of an area around a joint when coating a paint on a surface in particular. It is especially useful as sealants for siding board joint or sealants for stone joint. Further, since it can be adhered to wide-ranging substrates such as glasses, porcelains, wood, metals and resin molded articles, it is available as various types of adhesive compositions. It can be used as a starting material for usual adhesives and contact adhesives. Still further, it is useful as food packaging materials, casting rubber materials, templating materials and paints.

### Example

The invention is illustrated below by referring to Example. However, the invention is not limited by the Example. Incidentally, in case of a hydroxyl group-containing oxyalkylene polymer, the number average molecular weight is measured as follows. Assuming the end structure is composed of a hydroxyl group and an unsaturated group, the amount of the hydroxyl group is measured according to JIS K 1557, and the amount of the unsaturated group according to JIS K 0070. The number average molecular weight is defined as a molecular weight measured in consideration of the end number of the initiator. A GPC (gel permeation chromatography) peak top molecular weight (hereinafter referred to as GPCMp) and a molecular weight distribution (Mw/Mn) were determined on polystyrene equivalent basis value measured with a GPC analyzer using tetrahydrofuran as a solvent. Using a regression correlation of the GPC peak top molecular weight and the number average molecular weight obtained in advance, the number average molecular weight can be estimated. A viscosity was measured at 23°C using an E-type viscometer.

### (Example 1)

### <Synthesis of an oxyalkylene polymer>

50 g of polyoxypropylenediol having a number average molecular weight of 2,000 was used as an initiator of a first oxyalkylene polymer, and reacted with 950 g of propylene oxide (hereinafter referred to as PO) in the presence of a double metal cyanide complex catalyst to obtain a first oxyalkylene polymer having GPCMp of 40,000 and a viscosity of 150 Pa·s. As an initiator of a second oxyalkylene polymer, 8 g of butanol was added thereto, and the mixture was reacted with 315 g of PO to obtain an oxyalkylene polymer in which the second alkylene polymer having GPCMp of 4, 000 coexisted. The viscosity of the oxyalkylene polymer (P-1) in which the first oxyalkylene polymer and the second oxyalkylene polymer coexisted was 72 Pa·s.

### <Synthesis of a hydrolyzable silicon group-containing oxyalkylene polymer>

A 28% methanol solution of sodium methoxide was added to P1 such that sodium was 1.2 mols per mol of a hydroxyl group. After a reaction of removing methanol was conducted at 130°C under reduced pressure, allyl chloride was added in an amount of 1.5 mols per mol of a hydroxyl group, and the reaction was conducted for 2 hours. An unreacted volatile component was distilled off under reduced pressure to remove an inorganic salt and the like which were byproduced for purification to obtain a terminally allyloxidated polyoxypropylene polymer. By quantification of an unsaturated group, 95% of a hydroxyl group was found to be converted to an allyloxy group. 500 g of the resulting terminally allyloxidated polyoxypropylene polymer was reacted with methyldimethoxysilane in the presence of a xylene solution of a divinyltetramethylsiloxane platinum complex (containing 3% by weight of platinum) at 90°C for 2 hours to afford a polyoxypropylene polymer (P-2) in which methyldimethoxysilylpropyl groups were introduced in 75% of all terminal groups.

### (Conventional method)

Conventionally, a hydrolyzable silicon group-containing first oxyalkylene polymer was singly synthesized by singly polymerizing a first oxyalkylene polymer having at least two active hydrogen groups in the presence of a catalyst and then introducing a hydrolyzable silicon group. Further, a hydrolyzable silicon group-containing second oxyalkylene polymer was singly synthesized by singly polymerizing a second oxyalkylene polymer having one active hydrogen group in the presence of a catalyst and then introducing a hydrolyzable silicon group. Subsequently, these polymers were mixed to obtain a hydrolyzable silicon group-containing oxyalkylene polymer which had a low viscosity while maintaining a plasticity of a cured product and which did not contaminate an area around a sealing portion or had no adverse effect on an adhesion.

## Claims

1. A process for producing a hydrolyzable silicon group-containing oxyalkylene polymer, which comprises using, as a starting material, an polymer in which a first oxyalkylene polymer having at least two active hydrogen groups and a second oxyalkylene polymer having one active hydrogen group coexist, and converting the active hydrogen groups to hydrolyzable silicon groups.

2. The process for producing the hydrolyzable silicon group-containing oxyalkylene polymer according to claim 1, wherein a GPC (gel permeation chromatography) peak top molecular weight of the second oxyalkylene polymer starting material is not more than 0.6 times a GPC peak top molecular weight of the first oxyalkylene polymer starting material.

3. The process for producing the hydrolyzable silicon group-containing oxyalkylene polymer according to claim 1 or 2, wherein a viscosity of the oxyalkylene polymer starting material in which the first and second oxyalkylene polymers coexist is at most 3/4 of a viscosity of the first oxyalkylene polymer starting material.

4. The process for producing the hydrolyzable silicon group-containing oxyalkylene polymer according to any one of claims 1 to 3, wherein an oxyalkylene polymer in which100 parts by weight of the first oxyalkylene polymer and 300 parts by weight or less of the second oxyalkylene polymer coexist is used as a starting material.

5. The process for producing the hydrolyzable silicon group-containing oxyalkylene polymer according to any one of claims 1 to 4, wherein the oxyalkylene polymer starting material in which the first and second oxyalkylene polymers coexist is obtained by reacting the first initiator having at least two active hydrogen groups with an alkylene oxide in the presence of a catalyst to form the first oxyalkylene polymer, then adding the second initiator having one active hydrogen group and further reacting the alkylene oxide to form the second oxyalkylene polymer.

6. The process for producing the hydrolyzable silicon group-containing oxyalkylene polymer according to claim 5, wherein a feed rate of the alkylene oxide per molar amount of the second initiator after addition of the second initiator is not more than 0.6 times a feed rate of the alkylene oxide per molar amount of the first initiator before addition of the second initiator.

7. The process for producing the hydrolyzable silicon group-containing oxyalkylene polymer according to any one of claims 1 to 4, wherein the oxyalkylene polymer starting material in which the first and second oxyalkylene polymers coexist is obtained by causing the first and second initiators to coexist and then reacting these initiators with the alkylene oxide in the presence of a catalyst.

8. The process for producing the hydrolyzable silicon group-containing oxyalkylene polymer according to any one of claims 1 to 7, wherein the second oxyalkylene polymer starting material is produced from a second initiator represented by formula 1.
R¹-OH formula 1
(wherein R¹ is a monovalent organic group free from an unsaturated group and containing at least one selected from the group consisting of carbon, hydrogen, oxygen and nitrogen as a constituent atom.)

9. The process for producing the hydrolyzable silicon group-containing oxyalkylene polymer according to any one of claims 5 to 8, wherein the catalyst is a double metal cyanide complex catalyst.

10. The process for producing the hydrolyzable silicon group-containing oxyalkylene polymer according to any one of claims 1 to 9, which comprises a step of converting the active hydrogen group of the oxyalkylene polymer to a group represented by formula 2.
-O-R² formula 2
(wherein R² is a monovalent organic group having an unsaturated bond and containing at least one selected from the group consisting of carbon, hydrogen, oxygen and nitrogen as a constituent atom.)

11. The process for producing the hydrolyzable silicon group-containing oxyalkylene polymer according to claim 10, wherein after the active hydrogen group of the oxyalkylene polymer is converted to the group represented by formula 2, the hydrolyzable silicon group is introduced.
-O-R² formula 2
(wherein R² is a monovalent organic group having an unsaturated bond and containing at least one selected from the group consisting of carbon, hydrogen, oxygen and nitrogen as a constituent atom.)

12. The process for producing the hydrolyzable silicon group-containing oxyalkylene polymer according to any one of claims 1 to 9, wherein the active hydrogen group of the oxyalkylene polymer is reacted with a compound represented by formula 3 to introduce the hydrolyzable silicon group.
Rₐ₋₃-SiXₐ-R³NCO formula 3
(wherein R is a substituted or unsubstituted monovalent organic group having from 1 to 20 carbon atoms, X is a hydrolyzable group, a is 1, 2 or 3, and R³ is a substituted or unsubstituted divalent organic group having from 1 to 20 carbon atoms.)

13. A room temperature-curing composition comprising the hydrolyzable silicon group-containing oxyalkylene polymer produced by the process according to any one of claims 1 to 12.

14. The room temperature-curing composition according to claim 13, in which the room temperature-curing composition is substantially free from a plasticizer.
